# EUROPÄISCHE PATENTSCHRIFT

(11) **EP 1 228 344 B1**
(45) Veröffentlichungstag und Bekanntmachung des Hinweises auf die Patenterteilung: **02.02.2005**
(21) Anmeldenummer: 00979421.5
(22) Anmeldetag: 12.10.2000
(51) Int. Cl.: G01B 11/275, G01B 11/27, G01B 11/14, G01M 17/04, G01M 17/06

(54) **VERFAHREN UND EINRICHTUNG ZUM BEWERTEN DES SPIELES IN LAGERN ODER GELENKEN MITEINANDER GEKOPPELTER BAUTEILE**
METHOD AND DEVICE FOR EVALUATING THE TOLERANCE IN BEARINGS OR JOINTS CONSISTING OF COUPLED COMPONENTS
PROCEDE ET DISPOSITIF PERMETTANT D'EVALUER LE JEU DANS DES PALIERS OU DES ARTICULATIONS DE PIECES COUPLEES

(30) Priorität: 15.10.1999 DE 19949704
(43) Veröffentlichungstag der Anmeldung: 07.08.2002
(73) Patentinhaber: ROBERT BOSCH GMBH, 70442 Stuttgart (DE)
(72) Erfinder: NOBIS, Guenter, 72622 Nuertingen (DE)
(86) Internationale Anmeldenummer: PCT/DE2000/003588
(87) Internationale Veröffentlichungsnummer: WO 2001/029503

(56) Entgegenhaltungen:
- WO-A-99/23464
- WO-A-99/60368
- DE-A- 19 757 760
- DE-C- 3 708 295
- US-A- 4 798 461
- US-A- 5 535 522
- US-A- 5 600 435

## Beschreibung

### Stand der Technik

Die Erfindung bezieht sich auf ein Verfahren und eine Einrichtung zum Bewerten des Spieles in Lagern oder Gelenken miteinander gekoppelter Bauteile, insbesondere von Radaufhängungs- oder Lenkungsbauteilen eines Kraftfahrzeuges, bei dem die Bauteile mit wechselnden Kräften beaufschlagt werden.

Ein derartiges Verfahren bzw. eine dafür vorgesehene Einrichtung ist beispielsweise in einer Prüfeinrichtung zur Hauptuntersuchung des technischen Zustandes von Kraftfahrzeugen vorgesehen. Zur Überprüfung der Lagerspiele und Gelenkspiele in den Bauteilen der Radaufhängung und der Lenkung werden die zu prüfenden Räder auf eine meist pneumatisch betätigte Plattform gefahren. Vermittels dieser Plattform wird über den Reifen durch manuelle Auslösung der Pneumatik eine Kraft quer zur Fahrtrichtung auf ein Fahrzeugrad aufgebracht.

Dabei treten aufgrund der vorhandenen Lager- bzw. Gelenkspiele Verschiebungen zwischen den Bauteilen auf, die visuell beobachtet werden. Aufgrund der beim Prüfer vorhandenen Erfahrung wird dann eine subjektive Gut/Schlecht-Bewertung durchgeführt, die zugleich die Basis für die Entscheidung über die Notwendigkeit von durchzuführenden instandsetzungsarbeiten darstellt.

Darüber hinaus ist bekannt, dass für die Vermessung von Einzelspielen in Lagern und Gelenken bekannte Verfahren der Längenmesstechnik eingesetzt werden, wie z.B. mittels Messuhren. Dabei werden die Bauteile durch Einwirkung definierter Kräfte bei wechselnder Kraftrichtung gegeneinander verschoben. Ein Problem dieser Verfahren besteht in der Anbringung von Messelementen an den spielbehafteten Bauteilen, weshalb diese Messverfahren in der Praxis schwierig anwendbar sind.

In WO 99/60368 wird das Spiel von Robotergelenken unter Beaufschlagung mit wechselnden Kräften gemessen, wobei die Stellung der Teile durch Ablenkung eines Lichtstrahls auf einem positionsempfindlichen Detektor bestimmt wird. Weiterhin ist aus DE-C-3708295 bekannt, das Radlagerspiel bei drehendem Rad unter Einleitung einer axialen Kraft mit einem Laserinterferometer zu messen.

Der Erfindung liegt die Aufgabe zugrunde, ein Verfahren bzw. eine Einrichtung der eingangs genannten Art bereit zu stellen, mit dem/der die Bewertung des Spiels in Lagern bzw. Gelenken auf einfache Weise automatisch durchführbar ist.

Diese Aufgabe wird mit den Merkmalen des Anspruches 1 bzw. des Anspruches 9 gelöst.

Bei dem Verfahren ist vorgesehen, dass die Stellungen der Bauteile zu verschiedenen Zeitpunkten und/oder ihre Bewegungen mit mindestens einer Kamera bildhaft unmittelbar oder mittelbar (auf der Grundlage mit ihnen verbundener weiterer Teile) erfasst werden und aus den erfassten Stellungs- und/oder Bewegungsdaten eine Aussage zu dem Spiel abgeleitet wird. Bei der Einrichtung ist vorgesehen, dass an den gekoppelten Bauteilen unmittelbar oder an mit ihnen in Verbindung stehenden weiteren Bauteilen, optisch erkennbare Merkmale angeordnet oder vorhanden sind und dass die Einrichtung eine optische Messvorrichtung mit einer Bildaufnahmevorrichtung zum Erfassen der Merkmale während ihrer Bewegung und mit einer Auswerteeinrichtung zum Ermitteln des Spieles aus der Stellung der Bauteile oder deren Bewegung aufweist. Auf diese Weise werden die Lagen der Bauteile bzw. ihre Bewegung objektiv bestimmt und aus den Messdaten beispielsweise aufgrund der verschiedenen Stellungsmuster der Bauteile zu verschiedenen Zeitpunkten oder aus den Bewegungsmustem das Spiel ermittelt. Bei der Auswertung können auch die eingeleiteten Kräfte und ihre Änderungen berücksichtigt werden. Auf diese Weise ergeben sich eindeutige Aussagen bezüglich des Spiels und eine objektive Gut/ Schlecht-Bewertung.

Das Verfahren kann beispielsweise auf einem Prüfplatz durchgeführt werden, der auch zur Bestimmung der Rad- und Achsgeometrie dient, wie z.B. in der DE 197 57 763 A1 und der DE 197 57 760 A1 beschrieben, wobei allerdings die Einleitung der wechselnden Kräfte vorzunehmen ist und die Bewegung der gekoppelten Bauteile bzw. deren Stellungsbilder bei der Auswertung berücksichtigt werden. Durch Vermessung der Radbewegung relativ zur Karosserie oder durch Vermessung der Radstellungsänderung (Achsgeometrie) ist eine Messung der Summenspiele der Radaufhängungsbauteile bzw. der Lerikungsbauteile möglich.

Eine geeignete Vorgehensweise hierfür besteht darin, dass gleichzeitig Bilddaten entweder einer Bezugsmerkmalsanordnung und eines Rades oder einer Bezugsmerkmalsanordnung und zumindest eines Teils einer Karosserie oder des Rades und zumindest eines Teils der Karosserie oder aller drei Objekte in so kurz aufeinander folgenden Zeitpunkten erfasst werden, dass die Bewegungen der Karosserie und/oder des Rades aufgelöst werden, dass die Bewegung des Rades und/oder der Karosserie aus den Bilddaten bestimmt wird und dass das Spiel als Summenspiel aus einer Vermessung einer Radbewegung relativ zur Karosserie oder durch Vermessung der Radstellungsänderung bestimmt wird.

Für eine weitere Verbesserung der Genauigkeit der Spielmessung ist es vorteilhaft, wenn die Räder einer Achse zeitsynchron vermessen werden.

Die Messung des Spiels lässt sich z.B. einfach dadurch durchführen, dass die optische Erfassung und die Einleitung der wechselnden Kräfte während der Fahrt erfolgen. Hierbei kann die Bewegungsänderung durch Abbremsen und Beschleunigen bzw. Lenkeinschlag rechts und links bzw. durch eine geeignete Gestaltung der Fahrbahn bzw. durch externe Anregungen der Räder erfolgen.

Alternativ lässt sich die Messung bzw. Bewertung des Spiels in der Weise durchführen, dass die optische Erfassung und Einleitung der wechselnden Kräfte bei stehendem Fahrzeug erfolgen, wobei zum Erzeugen der Kräfte Lenkeinschläge in entgegengesetzten Richtungen vorgenommen werden oder eine an sich bekannte Krafteinteituhgsvomchtung benutzt wird.

Als Krafteinleitungsvorrichtung ist bei einer Hauptuntersuchung z.B. eine pneumatisch betätigte Plattform als Radaufstandsfläche üblich.

Zur Verbesserung der Bewertung des Lenkspiels ist weiterhin die Maßnahme vorteilhaft, dass zum Ermitteln des Lenkspiels am Rad zusätzlich der Lenkeinschlagwinkel am Lenkrad mit einer an sich bekannten Vorrichtung elektronisch oder optisch erfasst und in die Auswertung einbezogen wird.

Entsprechende Vorteile ergeben sich bei der Ausbildung der Einrichtung gemäß den Ansprüchen 10 bis 13.

Mit den genannten Maßnahmen werden objektive Messwerte erhalten, wodurch auch die Notwendigkeit der Durchführung von Reparaturen gegenüber dem Fahrzeughalter objektiv beurteitbar ist.

Das Verfahren bzw. die Einrichtung ermöglichen eine eindimensionale (z.B. Achsialspiel), zweidimensionale (z.B. ausgeschlagene Lager, Radialspiel) oder eine dreidimensionale Spielvermessung innerhalb eines Messvorganges, während bei einer subjektiven visuellen Beurteilung im Wesentlichen nur eine eindimensionale Spielerfassung ermöglicht wird.

Das Verfahren ermöglicht die Vermessung der unter normalen Einsatzbedingungen des Fahrzeuges (während der Fahrt) oder unter speziellen Prüfbedingungen (z.B. durch Einleitung definierter Kräfte mit einer pneumatisch betätigten Plattform) auftretenden Auswirkungen der vorhandenen Lager- bzw. Gelenkspiele auf das Fahrzeugrad bzw. die Radstellung. Damit werden die für den Reifenverschleiß und die Fahrsicherheit relevanten Einflüsse von im konkreten Fahrzeug vorhandenen Lager- und Gelenkspielen messtechnisch erfasst.

Wird die Spielmessung in Verbindung mit einem anderen optischen Prüfverfahren mit einer optischen Bildaufnahmevorrichtung, insbesondere Kameras, wie z.B. einer optischen Achsvermessung, durchgeführt, kann die Einrichtung mehrfach ausgenutzt werden, wobei der zusätzliche Aufwand gering ist.

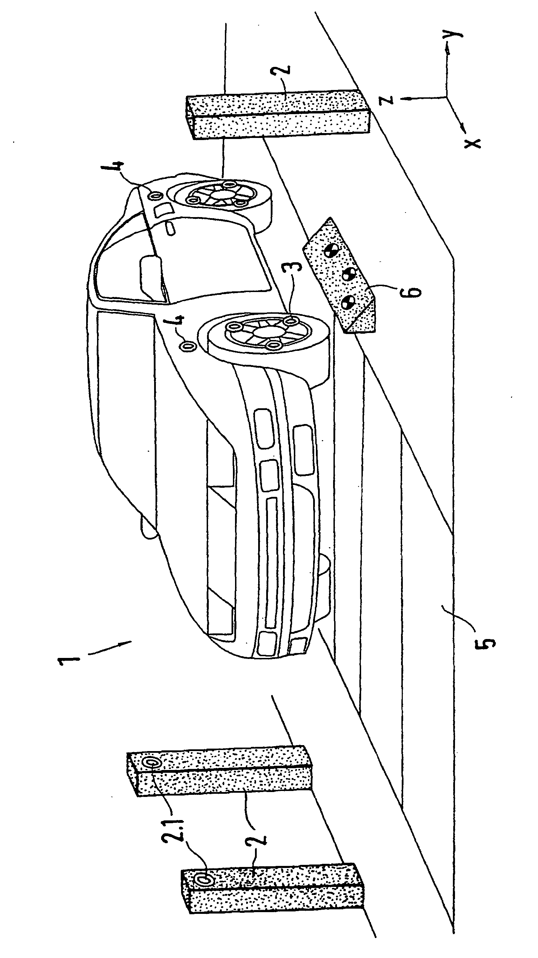

Die Erfindung wird nachfolgend anhand eines Ausführungsbeispiels unter Bezugnahme auf die Zeichnung beschrieben.

Die Fig. zeigt einen Prüfplatz mit einer Einrichtung 1 zum Bewerten des Spiels von Lagern oder Gelenken von Radaufhängungs- und/oder Lenkungsbauteilen eines Kraftfahrzeuges. Die Einrichtung 1 weist auf einem Prüfplatzboden 5 eine Bezugsmerkmalsanordnung 6 und seitlich installierte Bildaufnahmevorrichtungen 2 mit Bildaufnehmern 2.1, insbesondere Kameras, auf. Das Kraftfahrzeug ist an seiner Karosserie in der Nähe der Räder mit Karosseriemerkmalen 4 und an den Rädern mit Radmerkmalen 3 versehen.

Mit der Bildaufnahmevorrichtung 2, die mit einer Auswerteeinrichtung in Verbindung steht oder diese selbst aufweist, können in schneller Bildfolge durch Auswertung der Lage der Radmerkmale und der Karosseriemerkmale jeweilige Radstellungen und Karosseriepositionen bzw. die Bewegungen zumindest eines Rades bzw. der Karosserie festgestellt und aus den erhaltenen Lage- oder Bewegungsdaten unter dem Einfluss wechselnder Kräfte, die z.B. durch Beschleunigen oder Bremsen oder Lenkeinschläge in unterschiedlichen Richtungen während der Fahrt oder durch geeignete Gestaltung der Fahrbahn oder durch externe Anregungen der Räder erzeugt werden, gemessen werden. Dabei können die wechselnden Kräfte selbst in die Auswertung mit einbezogen werden. Auch können z.B. die Bewegungen beider Räder einer Achse zeitsynchron erfasst und zur Verbesserung der Messergebnisse miteinander verrechnet werden.

Die Verwendung dieser Einrichtung 1 mit der Bildaufnahmevorrichtung 2 für die Bestimmung des Spiels zwischen den Bauteilen während der Fahrt ermöglicht die summarische Erfassung aller Lager- bzw. Gelenkspiele unter dem Einfluss der wechselnden Kräfte in Folge der Bewegungsänderungen. Dabei treten aufgrund der vorhandenen Lager- bzw. Gelenkspiele Veränderungen der Radgeometrie auf, die mit der Einrichtung 1 messtechnisch erfasst werden. Mit der zeitsynchronen Vermessung der Räder einer Achse können Unterschiede zwischen rechtem und linkem Rad der Achse unter gleichen Betriebsbedingungen erfasst und bei der Bewertung berücksichtigt werden.

Bei der Ermittlung des Lenkspieles am Rad ist eine zusätzliche Verbesserung der Genauigkeit dadurch möglich, dass zusätzlich der Lenkeinschlagwinkel mit z.B. bereits bekannten Vorrichtungen elektronisch erfasst und in die Auswertung einbezogen wird. Alternativ kann die Erfassung des Lenkwinkels am Lenkrad auch optisch mit einer zusätzlichen Kamera erfolgen.

Zum Aufbringen der wechselnden Kräfte bei der Messung des Summenspiels kann auch eine bekannte Krafteinleitungsvorrichtung (z.B. eine pneumatisch betätigte Form, auf der das Fahrzeug steht) eingesetzt werden. Dabei wird dann die in Folge der Wechselbelastung eintretende Veränderung der Radstellung erfasst. Vorteilhafterweise können dabei die Räder einer Achse unter gleichen Belastungsbedingungen synchron vermessen werden.

Eine weitere Variante des Verfahrens besteht in der Spielmessung in einzelnen Lagern oder Gelenken. Dazu werden die zu prüfenden Bauteilpaare vor der Vermessung z.B. durch Anbringen geeigneter Messmarken an den Bauteilen markiert, um deren Relativbewegung zueinander unter dem Einfluss wechselnder Belastung optisch zu erfassen und messtechnisch auszuwerten. Anstelle spezieller Messmarken können auch einfache farbliche Markierungen oder die Auswertung charakteristischer Bauteilmerkmale, die mit bekannten Methoden der Bildverarbeitung erfassbar sind, verwendet werden.

Mehrere Lager bzw. Gelenke können gleichzeitig vermessen werden, wenn sie sich im Sichtbereich der mindestens einen Kamera befinden. Auch dabei kann die Wechselbelastung durch spezielle Prüfbedingungen (z.B. Lenkeinschlag oder Plattformbewegung) herbeigeführt werden.

Die Messung kann z.B. bei stationären Maschinen auch unter den bei normalen Einsatzbedingungen auftretenden Wechseibetastungen durchgeführt werden.

Tritt das Spiel im Lager oder Gelenk nur in einer Bewegungsebene auf, so ist es ausreichend, für die optische Vermessung nur eine Kamera einzusetzen. Auch hier ist es möglich, mehrere Lager/Gelenke gleichzeitig zu vermessen, wenn diese von einer Kamera bildhaft erfasst werden und deren Bewegungsebenen entweder parallel zueinander oder deren Winkellage zueinander dem Messsystem bekannt ist.

Zur Erfassung mehrerer Freiheitsgrade des Spiels - z.B. linear (Achsspiel), in der Ebene (Lagerspiel) oder rotatorisch (Lenkradspiel) - wird eine Betrachtung der zu prüfenden Bauteilpaarung bzw. mit ihnen gekoppelter Teile aus unterschiedlichen Perspektiven mittels z.B. zweier Kameras vorgenommen. Zur jeweiligen einfachen automatischen Ermittlung der Positionierungen der Kameras kann auf dem Prüfplatz eine der Bildaufnahmevorrichtung bekannte Bezugsmerkmalsanordnung 6 vorgesehen sein, wie in den eingangs genannten Druckschriften DE 197 57 763 A1 und DE 197 57 760 A1 angegeben. Mit einer kalibrierten Bezugsmerkmalsanordnung 6 ist es gleichzeitig auch auf einfache Weise möglich, absolute Messdaten zu gewinnen. Dadurch erübrigt sich zur Herleitung absoluter Messwerte beispielsweise eine werksseitige Kalibrierung der Bildaufnahmevorrichtung.

## Patentansprüche

1. Verfahren zum Bewerten des Spieles in Lagern oder Gelenken miteinander gekoppelter Bauteile, bei dem die Bauteile mit wechselnden Kräften beaufschlagt und aus einer optischen Erfassung während der Bewegung der Bauteile eine Aussage zu dem Spiel abgeleitet wird,
**dadurch gekennzeichnet,**
**dass** die Stellungen der Bauteile zu verschiedenen Zeitpunkten und/oder ihre Bewegungen mit mindestens einer Kamera bildhaft unmittelbar oder mittelbar erfasst werden und aus den erfassten Stellungs- und/oder Bewegungsdaten durch Auswertung der bildhaften Daten eine Aussage zu dem Spiel abgeleitet wird.

2. Verfahren nach Anspruch 1,
**dadurch gekennzeichnet,**
**dass** es sich bei den Bauteilen um Radaufhängungs- oder Lenkungsbauteile eines Fahrzeuges handelt,
**dass** gleichzeitig Bilddaten entweder einer Bezugsmerkmalsanordnung und eines Rades oder einer Bezugsmerkmalsanordnung und zumindest eines Teils einer Karosserie oder des Rades und zumindest eines Teils der Karosserie oder aller drei Objekte in so kurz aufeinander folgenden Zeitpunkten erfasst werden, dass die Bewegungen der Karosserie und/
oder des Rades aufgelöst werden,
**dass** die Bewegung des Rades und/oder der Karosserie aus den Bilddaten bestimmt wird und
**dass** das Spiel als Summenspiel aus einer Vermessung einer Radbewegung relativ zur Karosserie oder durch Vermessung der Radstellungsänderung bestimmt wird.

3. Verfahren nach Anspruch 2,
**dadurch gekennzeichnet,**
**dass** die Räder einer Achse zeitsynchron vermessen werden.

4. Verfahren nach Anspruch 2 oder 3,
**dadurch gekennzeichnet,**
**dass** die optische Erfassung und die Einleitung der wechselnden Kräfte während der Fahrt erfolgen.

5. Verfahren nach Anspruch 4,
**dadurch gekennzeichnet,**
**dass** die Einleitung der wechselnden Kräfte durch Beschleunigen und Abbremsen oder Lenkeinschläge in entgegengesetzten Richtungen oder
durch geeignete Gestaltung der Fahrbahn oder durch externe Anregungen der Räder erfolgt.

6. Verfahren nach Anspruch 2 oder 3,
**dadurch gekennzeichnet,**
**dass** die optische Erfassung und Einleitung der wechselnden Kräfte bei stehendem Fahrzeug erfolgen, wobei zum Erzeugen der Kräfte Lenkeinschläge in entgegengesetzten Richtungen vorgenommen werden oder eine an sich bekannte Krafteinleitungsvorrichtung benutzt wird.

7. Verfahren nach einem der Ansprüche 2 bis 6,
**dadurch gekennzeichnet,**
**dass** zum Ermitteln des Lenkspiels am Rad zusätzlich der Lenkeinschlagwinkel am Lenkrad mit einer an sich bekannten Vorrichtung elektronisch oder optisch erfasst und in die Auswertung einbezogen wird.

8. Verfahren nach Anspruch 1,
**dadurch gekennzeichnet,**
**dass** zur Spielmessung in einzelnen Lagern oder Gelenken das zu prüfende Bauteilpaar vor der optischen Vermessung mit einer Messmarkierung versehen wird oder Bauteilmerkmale, die an den Bauteilen ohnehin vorhanden sind, erfasst werden und
**dass** die Relativbewegung oder -stellung der Bauteile zueinander festgestellt wird.

9. Einrichtung zum Bewerten des Spieles von Lagern oder Gelenken miteinander gekoppelter Bauteile,
wobei an den beiden gekoppelten Bauteilen unmittelbar oder an mit ihnen in Verbindung stehenden weiteren Bauteilen optisch erkennbar Merkmale (3, 4) angeordnet oder vorhanden sind
**dadurch gekennzeichnet, dass** die Einrichtung eine optische Messvorrichtung mit einer Bildaufnahmevorrichtung (2) zum Erfassen der Merkmale während ihrer Bewegung und mit einer Auswerteeinrichtung zum Ermitteln des Spieles aus der Stellung der Bauteile oder deren Bewegung aufweist.

10. Einrichtung nach Anspruch 9,
**dadurch gekennzeichnet,**
**dass** es sich bei den Bauteilen um Radaufhängungs- oder Lenkungsbauteile eines Fahrzeuges handelt,
**dass** die Bildaufnahmevorrichtuna (2) zum Erfassen von Radmerkmalen (3) zumindest eines Rades und von Karosseriemerkmalen (4) zumindest eines benachbarten Teils der Karosserie (4) während der Fahrt eingerichtet ist oder
**dass** sie zum Erfassen der Radmerkmale (3) zumindest eines Rades und von Karosseriemerkmalen (4) zumindest eines benachbarten Teils der Karosserie oder von an den Bauteilen angebrachten Merkmalen eingerichtet ist.

11. Einrichtung nach Anspruch 10,
**dadurch gekennzeichnet,**
**dass** sie zum zusätzlichen Erfassen eines Lenkeinschlagwinkels ausgelegt ist.

12. Einrichtung nach Anspruch 9, 10 oder 11,
**dadurch gekennzeichnet,**
**dass** sie eine Krafteinleitungsvorrichtung zum Beaufschlagen zumindest eines der beiden Bauteile unmittelbar oder mittelbar mit wechselnden Kräften aufweist.

13. Einrichtung nach einem der Ansprüche 9 bis 12,
**dadurch gekennzeichnet,**
**dass** eine Bezugsmerkmalsanordnung (6) vorgesehen ist und
**dass** die Bezugsmerkmalsanordnung (6) in die Herleitung absoluter Messdaten einbezogen ist.

## Claims

1. Method for evaluating the play in bearings or joints of components which are coupled to one another, in which changing forces are applied to the components and definitive information about the play is derived from visual assessment during the movement of the components, **characterized in that** images are directly or indirectly taken of the positions of the components at various times, and/or of their movements using at least one camera, and definitive information about the play is derived from the acquired position data and/or movement data by evaluating the image data.

2. Method according to Claim 1, **characterized in that** the components are wheel suspension components or steering components of a vehicle, **in that** at the same time image data of either one reference feature arrangement and one wheel or one reference feature arrangement and at least one part of a bodywork or of the wheel and at least one part of the bodywork or all three objects is acquired at times which follow one another in such short succession that the movements of the bodywork and/or of the wheel are resolved, **in that** the movement of the wheel and/or of the bodywork is determined from the image data, and **in that** the play is determined as a total play from a measurement of a wheel movement in relation to the bodywork or by measuring the change in the wheel position.

3. Method according to Claim 2, **characterized in that** the wheels of one axle are measured synchronously.

4. Method according to Claim 2 or 3, **characterized in that** the visual assessment and the application of the changing forces are carried out during travel.

5. Method according to Claim 4, **characterized in that** the application of the changing forces is carried out by means of accelerations and braking or steering locks in opposite directions or by means of a suitable configuration of the underlying surface or by external excitations of the wheels.

6. Method according to Claim 2 or 3, **characterized in that** the visual assessment and application of the changing forces are carried out when the vehicle is stationary, steering locks being implemented in opposite directions or a force application device which is known per se being used in order to generate the forces.

7. Method according to one of Claims 2 to 6, **characterized in that**, in order to determine the steering play at the wheel, the steering lock angle at the steering wheel is additionally electronically or visually registered with a device which is known per se and included in the evaluation.

8. Method according to Claim 1, **characterized in that**, in order to measure play in individual bearings or joints, the pair of components which are to be tested are provided with a measurement mark before the optical measurement or component features which are present in any case on the components are registered, and **in that** the relative movement or position of the components with respect to one another is detected.

9. Device for evaluating the play of bearings or joints of components which are coupled to one another, features (3, 4) being arranged or being present in an optically detectable fashion on the two coupled components directly or on further components which are connected to them, **characterized in that** the device has an optical measuring device with an image recording device (2) for sensing the features during their movement and with an evaluation device for determining the play from the position of the components or their movement.

10. Device according to Claim 9, **characterized in that** the components are wheel suspension components or steering components of a vehicle, **in that** the image recording device (2) is designed to register wheel features (3) of at least one wheel and bodywork features (4) of at least an adjacent part of the bodywork (4) during travel, or **in that** it is designed to register the wheel features (3) of at least one wheel and of bodywork features (4) of at least one adjacent part of the bodywork or features which are provided on the components.

11. Device according to Claim 10, **characterized in that** it is configured to additionally register a steering lock angle.

12. Device according to Claim 9, 10 or 11, **characterized in that** it has a force application device for applying changing forces directly or indirectly to at least one of the two components.

13. Device according to one of Claims 9 to 12, **characterized in that** a reference feature arrangement (6) is provided, and **in that** the reference feature arrangement (6) is included in the derivation of absolute measurement data.

## Revendications

1. Procédé permettant d'évaluer le jeu dans des paliers ou des articulations de pièces couplées dans lequel les pièces sont chargées par des forces variables et dans lequel une information sur le jeu est déduite à partir de la détection optique pendant le déplacement des pièces,
**caractérisé en ce que**
les positions des pièces à différents moments et/ou leurs mouvements sont enregistrées directement ou indirectement par au moins une caméra et il est possible de déduire une information sur le jeu à partir des données de positionnement et/ou de mouvement en évaluant les données sous forme d'images.

2. Procédé selon la revendication 1,
**caractérisé en ce que**
les pièces utilisées sont des pièces de la suspension de la roue ou de la direction d'un véhicule, et des données-images, soit d'une disposition de caractéristiques de référence et d'une roue, soit d'une disposition de caractéristiques de référence et d'au moins une pièce d'une carrosserie, soit de la roue et d'au moins une partie de la carrosserie, soit de tous ces trois objets, sont enregistrées simultanément à des moments si rapprochés les uns des autres que les mouvements de la carrosserie et/ou de la roue sont analysés, et le mouvement de la roue et/ou de la carrosserie est défini à partir des données-images et le jeu est déterminé en tant que jeu additionnel à partir d'une mesure d'un mouvement de la roue par rapport à la carrosserie ou par la mesure de la modification de la position de la roue.

3. Procédé selon la revendication 2,
**caractérisé en ce que**
les roues d'un essieu sont mesurées de manière synchronisée.

4. Procédé selon la revendication 2 ou 3,
**caractérisé en ce que**
la détermination optique et l'introduction des forces variables se produisent pendant la conduite.

5. Procédé selon la revendication 4,
**caractérisé en ce que**
l'introduction des forces variables se produit par les accélérations et les ralentissements ou les angles de braquage dans des directions opposées ou par une configuration appropriée de la chaussée ou par des excitations externes des roues.

6. Procédé selon la revendication 2 ou 3,
**caractérisé en ce que**
la détection optique et l'introduction des forces variables ont lieu pour un véhicule à l'arrêt, des angles de braquage étant réalisés en des directions opposées pour générer les forces ou un dispositif connu d'introduction des forces étant utilisé.

7. Procédé selon l'une quelconque des revendications 2 à 6,
**caractérisé en ce que**
l'angle de braquage sur le volant de direction est détecté optiquement ou électroniquement en complément, par un dispositif connu, afin de déterminer le jeu de direction sur la roue avant d'être intégré dans l'évaluation.

8. Procédé selon la revendication 1,
**caractérisé en ce que**
pour mesurer le jeu dans des paliers ou des articulations individuels, la paire de pièces à contrôler est dotée d'un repère de mesure avant la mesure optique ou des caractéristiques de pièces existant sur les pièces sont enregistrées et le mouvement ou la position relatifs des pièces les unes par rapport aux autres est déterminé(e).

9. Dispositif permettant d'évaluer le jeu dans des paliers ou des articulations de pièces couplées, des caractéristiques identifiables visuellement (3, 4) existant ou étant attribuées aux deux pièces couplées directement ou à d'autres pièces reliées aux premières.
**caractérisé en ce que**
le dispositif comporte un dispositif de mesure optique avec un dispositif de prise de vue (2) pour détecter les caractéristiques pendant leur déplacement et avec un dispositif d'évaluation pour déterminer le jeu à partir de la position des pièces et de leur mouvement.

10. Dispositif selon la revendication 9,
**caractérisé en ce que**
les pièces utilisées sont des pièces de la suspension de la roue ou de la direction d'un véhicule, et le dispositif de prise de vue (2), pour détecter les caractéristiques de la roue (3) d'au moins une roue et les caractéristiques de la carrosserie (4) d'au moins une pièce voisine de la carrosserie (4), est ajusté pendant la conduite ou il est installé pour déterminer les caractéristiques de la roue (3) d'au moins une roue et les caractéristique de la carrosserie (4) d'au moins une pièce voisine de la carrosserie ou des caractéristiques appliquées sur les pièces.

11. Dispositif selon la revendication 10,
**caractérisé en ce qu'**
il est conçu pour la détection supplémentaire d'un angle de braquage.

12. Dispositif selon la revendication 9, 10 ou 11,
**caractérisé en ce qu'**
il présente un dispositif d'introduction des forces pour charger au moins l'une des deux pièces directement ou indirectement avec des forces variables.

13. Dispositif selon l'une quelconque des revendications 9 à 12,
**caractérisé en ce qu'**
une disposition des caractéristiques de référence (6) est prévue et la disposition des caractéristiques de référence (6) est comprise dans la déduction des données de mesure absolues.
